# EUROPEAN PATENT APPLICATION

(11) **EP 2 703 780 A2**
(43) Date of publication of application: **05.03.2014**
(21) Application number: 12196258.3
(22) Date of filing: 10.12.2012
(51) Int. Cl.: G01C 21/36

(54) **Navigation apparatus and display method thereof**

(30) Priority: 30.08.2012 KR 20120095922
(71) Applicant: Hyundai Mnsoft, Inc., Seoul 140-711 (KR)
(72) Inventor: Kim, Seong-Dae, 140-711 Seoul (KR)
(74) Representative: Viering, Jentschura & Partner Patent- und Rechtsanwälte

(57) **Abstract**

A navigation apparatus includes a priority information database that stores display priority of a plurality of additional images (301) to be displayed on a map image, and a control unit configured to adjust opacity of the additional images according to the display priority when an overlap between the additional images is detected. Accordingly, a display unit displays the additional images having the adjusted opacity.

## Description

### Field of the Invention

The present invention relates to a navigation apparatus, and more particularly, to a display method of a navigation apparatus.

### Background of the Invention

Recently, navigation apparatuses that search and guide a route which a user desires from a start point to a destination by using map data are widely used.

In such navigation apparatuses, navigation apparatuses for vehicles and navigation apparatuses of communication types are practically used. The vehicle navigation apparatus is mounted on or built in a vehicle, and guides a route to destination to a driver. The communication type navigation apparatus transmits a route search request to a route search server by using a navigation terminal such as a portable terminal, and receives the search result to guide a route to destination.

A screen of the navigation apparatus is fundamentally configured in a structure where a vehicle symbol and a variety of user interface images for a user's manipulation and convenience are displayed on a map image. Also, an image of driving-related information generated by driving of a vehicle is additionally arranged and displayed on the screen of the navigation apparatus. Therefore, an overlap between images displayed on the map image occurs frequently. For this reason, as the functions of the navigation apparatus increase, the number of images increases, and thus, the increased images cover map-related information.

### Summary of the Invention

In view of the above, the present invention provides a navigation apparatus and a display method thereof, which increase the visibility of a map image and map-related information and enable the provision of various functions.

In accordance with a first aspect of the present invention, there is provided a navigation apparatus which includes: a priority information database (DB) that stores display priority of a plurality of additional images to be displayed on a map image; a control unit configured to adjust opacity of the additional images according to the display priority when an overlap between the additional images is detected; and a display unit configured to display the additional images having the adjusted opacity.

Preferably, the additional images include a map-matched image and a non map-matched image. The map-matched image includes additional images displayed in association with a position on the map image, and the non map-matched image includes all additional images, indicative of speed displayed on a screen of the navigation apparatus, except the map-matched image.

Preferably, the map-matched image includes one or more of a route to destination, a current position of the navigation apparatus, a point of interest (POI), and a predetermined main landmark, which are displayed along a road and street on the map image, and the non map-matched image includes one or more of a manipulation button image, a traffic lane guide image, a safe driving guide image, and a clock image.

Preferably, the control unit adjusts opacity of the non map-matched image by predetermined levels when the map-matched image and the non map-matched image overlap.

Preferably, the display priority of the map-matched image and the non map-matched image is set depending on a speed that a vehicle equipped with the navigation apparatus is moving.

Preferably, the control unit adjusts opacity of the non map-matched image by a predetermined value when the non map-matched image overlaps a road region on which a vehicle is currently driving.

In accordance with a second aspect of the present invention, there is provided a display method of a navigation apparatus, which includes: setting display priority of a plurality of additional images to be displayed on a map image; adjusting opacity of the additional images according to the display priority when an overlap between the additional images is detected; and displaying the additional images having the adjusted opacity.

Preferably, the adjusting opacity includes decreasing, when the map-matched image and the non map-matched image overlap, opacity of the non map-matched image by a predetermined level.

Preferably, the setting display priority of a plurality of additional images displayed on a map image includes setting the display priority according to a speed that a vehicle equipped with the navigation apparatus is moving.

Preferably, the adjusting of opacity includes: decreasing, when the non map-matched image overlaps a road region in which a vehicle is currently driving, opacity of the non map-matched image by a predetermined value.

### Brief Description of the Drawings

The above and other objects and features of the present invention will become apparent from the following description of embodiments given in conjunction with the accompanying drawings, in which:
Fig. 1 illustrates a block diagram of a configuration of a navigation apparatus in accordance with present invention;
Fig. 2 is a flowchart illustrating a display method of the navigation apparatus in accordance with present invention; and
Figs. 3 and 4 are diagrams showing additional images whose opacity is adjusted.

### Detailed Description of the Embodiments

The present invention may have diverse modified embodiments, and thus, example embodiments are illustrated in the drawings and are described in the detailed description of the present invention. However, this does not limit the invention within specific embodiments and it should be understood that the invention covers all the modifications, equivalents, and replacements within the idea and technical scope of the present invention.

In the following description, when the detailed description of the relevant known function or configuration is determined to unnecessarily obscure the important point of the present invention, the detailed description will be omitted. Also, in the specification, each number used herein is merely reference numeral for differentiating one element from the other elements.

In this disclosure below, when one part (or element, device, etc.) is referred to as being 'connected' or 'contacted' to another part (or element, device, etc.), it should be understood that the one part can be 'directly connected' or 'directly contacted' to the other part, but can be 'connected' or 'contacted' to the other part via an intervening part (or element, device, etc.) if there is no specific limitation.

Hereinafter, embodiments of the present invention will be described in detail with reference to the accompanying drawings. Like reference numerals refer to like elements throughout.

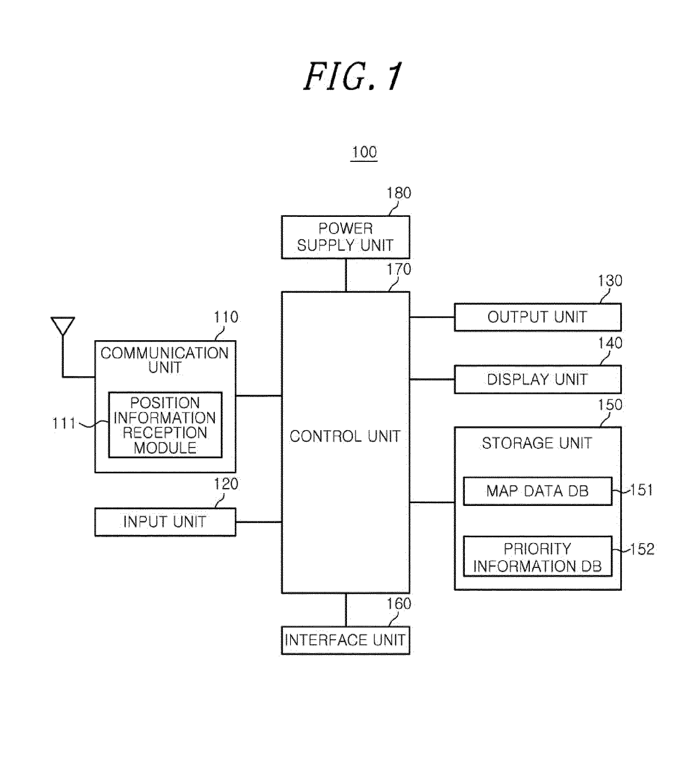

Fig. 1 illustrates a block diagram of a configuration of a navigation apparatus in accordance with present invention.

In the embodiment, a navigation terminal mounted on a vehicle is described as an example, but a navigation apparatus of the present invention is not limited thereto. As an example, the navigation terminal may be implemented as a mobile communication terminal capable of communicating with a route search server and a map server.

Referring to Fig. 1, a navigation apparatus 100 in accordance with an embodiment of present invention includes a communication unit 110, a input unit 120, a sound output unit 130, a display unit 140, a storage unit 150, an interface unit 160, a control unit 170, and a power supply unit 180. The communication unit 110 may include a position information reception module 111. Although not shown, also, the communication unit 110 may further include a mobile communication module, a wireless Internet module, a near field communication module, etc. depending on the case.

The position information reception module 111 is a module for checking or obtaining a current position of the navigation apparatus 100. As a representative example of the position information reception module 111, there is a global positioning system (GPS) receiver. According to current technology, the GPS receiver may calculate a distance from one point (or object) to three or more satellites and a time at which the distance has been measured, and, by applying trigonometry to the calculated distance, the GPS receiver may calculate three-dimensional (3D) position based on the latitude, longitude, and altitude of the one point at a time. Furthermore, the GPS receiver may use a method that calculates position and time by using three satellites, and corrects an error between the calculated position and the calculated time by using another satellite. The GPS receiver may continuously calculate a current position in real time, and calculate speed using a movement distance.

The input unit 120 is a user interface for receiving various commands from a user, and the implementation of the input unit 120 is not limited. For example, the input unit 120 may include a plurality of manipulation units, which may be implemented as a keypad, a pressure-sensitive/capacitive touch pad, a wheel key, a jog switch, etc.

Especially, the navigation apparatus 100 generally uses a touch screen, in which case the input unit 120 may be integrated with the display unit 140 as one body and implemented in an entire surface of a display screen.

The sound output unit 130 outputs voice or sound associated with route guide and alarm announcing dangerous road section, traffic conditions, speed limitation, etc. during the route guide.

The display unit 140 displays information that the navigation apparatus 100 has received or processed. For example, the display unit 140 may be implemented as a liquid crystal display (LCD). Also, as described above, in case where the navigation apparatus is equipped with a touch screen in which the display unit 140 is combined with a sensing function, the display unit 140 may be used as an input unit. Hereinafter, when the touch screen is used as the display unit 140, the component related to touch sensing is referred to as the user input unit 120.

The storage unit 150 stores a program, for example, for calculating and obtaining a route to a destination, to execute the control unit 170, and stores data processed by the control unit 170. Also, the storage unit 150 includes a map data database (DB) 151 storing map data. However, when the navigation apparatus 100 is a communication type navigation terminal that downloads map data from a map server by communicating with the map server, the map data DB 151 may not be provided.

Moreover, the storage unit 150 may include a priority information DB 152 that stores display priority for an additional images to be displayed on a map image. For example, the additional image to be displayed on the map image may include a map-matched image and a non map-matched image.

The map-matched image refers to as an additional image that is displayed according to a position on a map, and may include a route to destination, a current position of a vehicle equipped with the navigation apparatus, a point of interest (POI), and a predetermined main landmark, which are displayed along a road and/or street on a map image.

In addition, the map-matched image may be classified into three categories: a network-related image, a background-related image, and a symbol-related image. The network-related image may have an association between networks for a route search and guidance along a route and may include attribution information on, for example, roads, lanes, road-ranks (expressway, street, etc.), traffic lights, links, nodes, left- and right-turns, crossways and the like, which is displayed in a map image on a display unit of a navigation apparatus when a route is searched. A background-related image may be information on buildings, apartment complexes, facilities, and the like, other than the network-related image. Finally, the symbol-related image may be information including texts, characters, logos, icons representative of a region, facilitates, and building, for example, a gas station, hospital, church and the like.

The non map-matched image may include all images, which may be auxiliary guidance information to help a driver, displayed on the screen of the navigation apparatus 100, except the map-matched image. For example, the non map-matched image may include a manipulation button image, a traffic lane guide image representative of a road guidance or an access road, a safe driving guide image, a clock image, etc.. In addition, the non map-matched image may include an image indicating a speed indicator, a surveillance camera, an accident and the like.

The display priority information on the additional image may be fundamentally set in order for the map-matched image to have priority higher than the non map-matched image. Alternatively, the display priority information on the additional image may be may be freely changed by setting of the user.

Moreover, the display priority of the map-matched image and the non map-matched image may be set depending on a speed of a vehicle equipped with the navigation apparatus. For example, when a vehicle is moving, the visibility of the map-matched image is important and thus the display priority of the map-matched image may be set higher than that of the non map-matched image. On the other hand, when the vehicle is in a stop state, the display priority of the map-matched image may be set equally to or lower than that of the non map-matched image.

Each data stored in the storage unit 150 may be updated whenever data is received through the interface unit 160.

The interface unit 160 acts as an interface for a connection between the navigation apparatus 100 and an external device. For example, the interface unit 160 may receive data from an external device, receive power to transfer the power to the internal elements of the navigation apparatus 100, or allow internal data generated in the navigation apparatus 100 to be transmitted to the external device. For example, the interface unit 160 may include wired/wireless data ports, external charger ports, memory card ports, audio input/output (I/O) ports, video I/O ports, etc.

The control unit 170 commonly controls the overall operation of the navigation apparatus 100. Particularly, the control unit 170 may display a vehicle symbol at a geographical position on a map image when a vehicle moves and stops, or may find a route to destination in response to a route to destination search request from the user and then display the route to destination. During the display of the route to destination, when the control unit 170 detects an overlap between additional images, the control unit 170 may adjust the opacity of each of the additional images according to display priority. Also, when the control unit 170 detects an overlap between the non map-matched image and a predetermined region (for example, a road region in which the vehicle is currently driving) of a map image, the control unit 170 may adjust the opacity of the non map-matched image.

In the embodiment, the opacity of images may be adjusted in a way of increasing or decreasing. For example, in order to inform an occurrence of an accident of a user, the opacity of image indicating the occurrence accident may be decreased so that the image can be viewed distinctly to a user. However, in most cases, it is preferably to increase the opacity of images to be viewed dimmer, not to hinder the sight of a user.

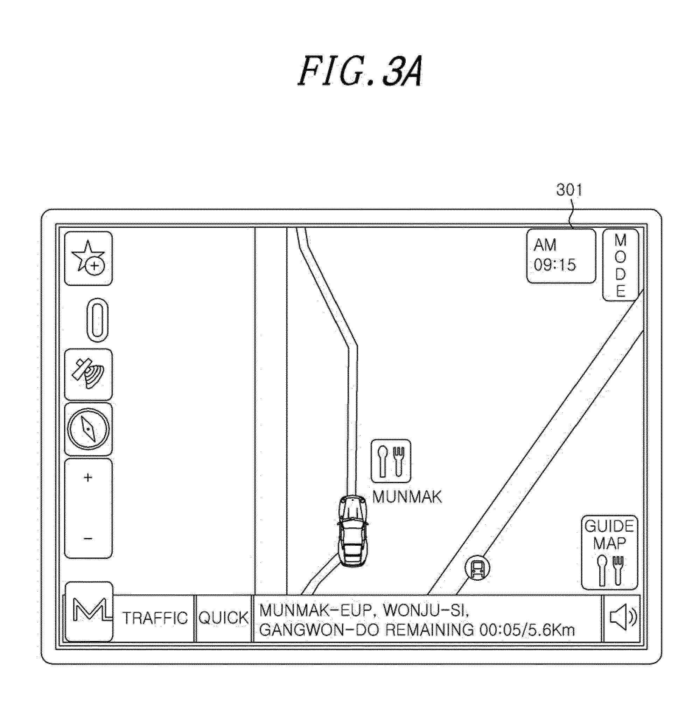

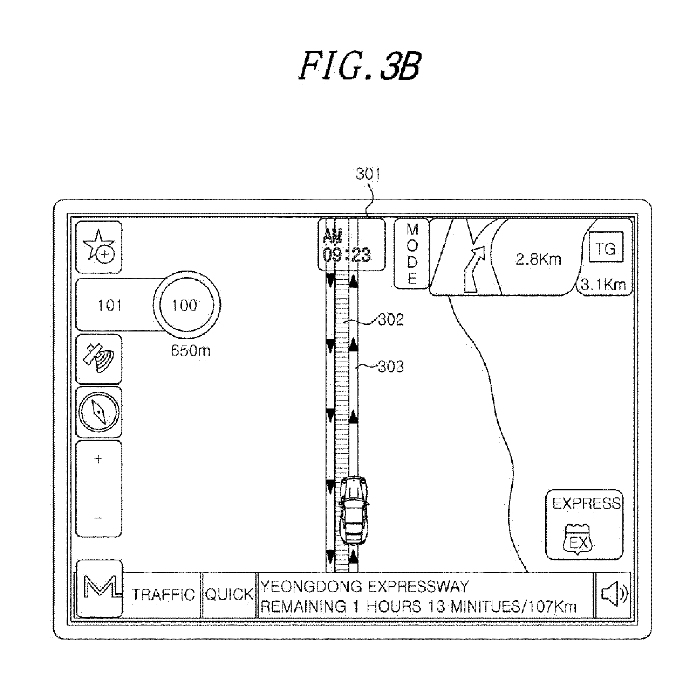

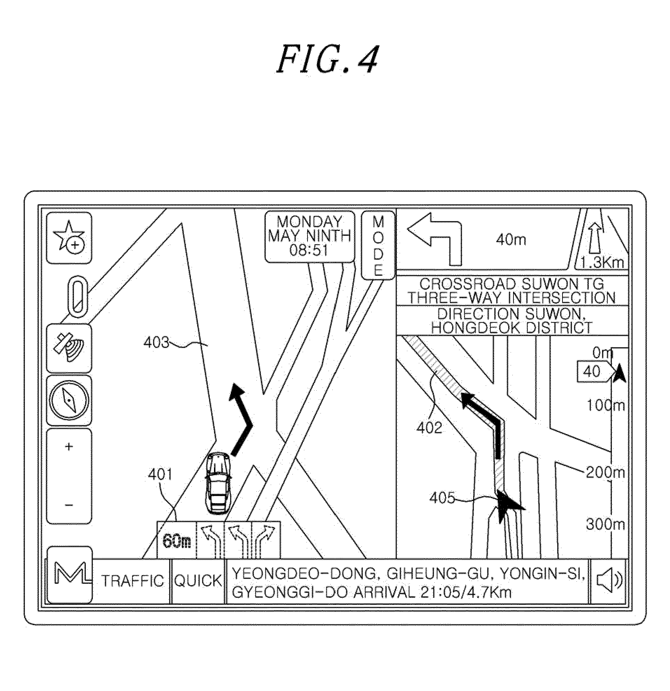

Figs. 3A, 3B and 4, for example, show additional images whose opacity is adjusted. As shown in Fig. 3A, when a vehicle equipped with the navigation apparatus is in a stop state or there is no overlap between additional images such as a clock image 301, the clock image 301 may be displayed to have high opacity. As shown in Fig. 3B, when a vehicle equipped with the navigation apparatus is moving or there is an overlap between a route to destination 302 or a traffic lane 303 and a clock image 301, the clock image 301 may be displayed to have low opacity. In addition, as shown in Fig. 4, when a map-matched image such as a current position 405 of a vehicle, a route to destination 402, a traffic lane 403, etc. overlaps a traffic lane guide image 401 of the non map-matched image, the traffic lane guide image 401 may be displayed to have low opacity.

The power supply unit 190 receives external power or internal power to supply power necessary for the operation of each element according to a control by the control unit 170.

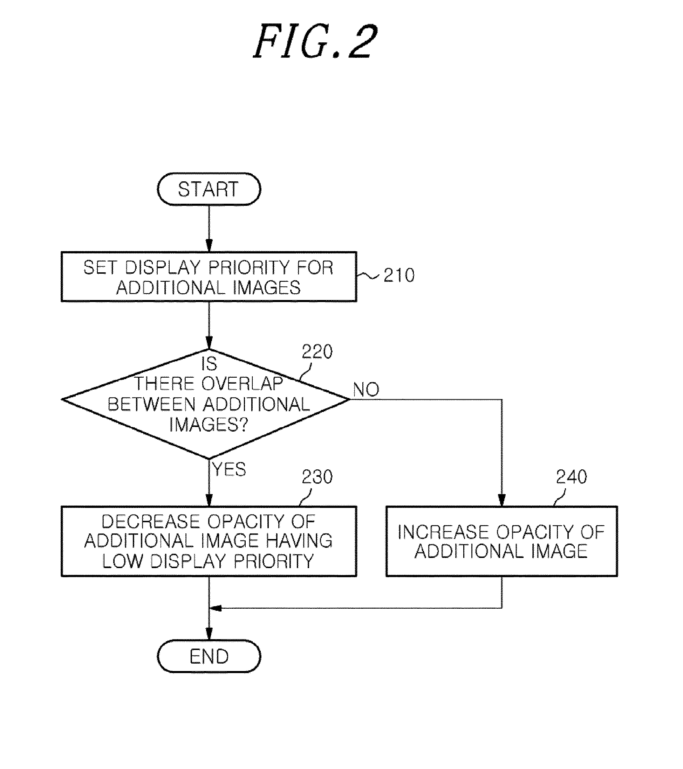

Fig. 2 is a flowchart illustrating a display method of the navigation apparatus in accordance with present invention.

In operation 210, display priority of additional images displayed on a map image is set in the navigation apparatus 100. For example, a map-matched image may be set higher than a non map-matched image in priority.

In operation 220, the navigation apparatus 100 determines whether the additional images overlap on the map image.

In operation 230, when some additional images overlap, the navigation apparatus 100 adjusts the opacity of an additional image having relatively low display priority by a predetermined level, and displays the additional image having the adjusted opacity.

In operation 240, when additional images do not overlap, the navigation apparatus 100 adjusts the opacity of the additional images by predetermined levels, and displays the additional images having the increased opacity.

The display method in accordance with the embodiments of the present invention may be implemented as computer-readable codes in a computer readable medium. The computer-readable recording medium may include a program instruction, a local data file, a local data structure, or a combination thereof.

The computer-readable recording medium may be specific to exemplary embodiments of the invention or commonly known to those of ordinary skill in computer software. The computer-readable recording medium includes all types of recordable media in which computer readable data are stored. Examples of the computer-readable recording medium include a magnetic medium, such as a hard disk, a floppy disk and a magnetic tape, an optical medium, such as a CD-ROM and a DVD, a magneto-optical medium, such as a floptical disk, and a hardware memory, such as a ROM, a RAM and a flash memory, specifically configured to store and execute program instructions. Further, the computer-readable recording medium may be implemented in the form of a transmission medium, such as light, wire or waveguide, to transmit signals which designate program instructions, local data structures and the like. Examples of the program instruction include machine code, which is generated by a compiler, and a high level language, which is executed by a computer using an interpreter and so on.

The above-described hardware apparatus may be configured to operate as one or more software modules for performing the operation of the present invention, and the reverse case is similar.

The present invention can increase the visibility of a map image and map-related information and provide various functions.

While the invention has been shown and described with respect to the embodiments, the present invention is not limited thereto. It will be understood by those skilled in the art that various changes and modifications may be made without departing from the scope of the invention as defined in the following claims.

## Claims

1. A navigation apparatus comprising:
a priority information database (DB) that stores display priority of a plurality of additional images to be displayed on a map image;
a control unit configured to adjust opacity of the additional images according to the display priority when an overlap between the additional images is detected; and
a display unit configured to display the additional images having the adjusted opacity.

2. The navigation apparatus of claim 1, wherein the additional images include a map-matched image and a non map-matched image, the map-matched image including additional images displayed in association with a position on the map image, and the non map-matched image including all additional images, displayed on a screen of the navigation apparatus, except the map-matched image.

3. The navigation apparatus of claim 2, wherein the map-matched image comprises one or more of a route to destination, a current position of the navigation apparatus, a point of interest (POI), and a predetermined main landmark, which are displayed along a road and street on the map image,
and
the non map-matched image comprises one or more of a manipulation button image, a traffic lane guide image, a safe driving information image, and a clock image.

4. The navigation apparatus of claim 2, wherein the control unit adjusts opacity of the non map-matched image by predetermined levels when the map-matched image and the non map-matched image overlap.

5. The navigation apparatus of claim 2, wherein the display priority of the map-matched image and the non map-matched image is set depending on a speed that a vehicle equipped with the navigation apparatus is moving.

6. The navigation apparatus of claim 2, wherein the control unit adjusts opacity of the non map-matched image by predetermined levels when the non map-matched image overlaps a road region in which a vehicle equipped with the navigation apparatus is currently driving.

7. A display method of a navigation apparatus, the method comprising:
setting display priority of a plurality of additional images to be displayed on a map image;
adjusting opacity of the additional images according to the display priority when an overlap between the additional images is detected; and
displaying the additional images having the adjusted opacity.

8. The display method of claim 7, wherein the additional images include a map-matched image and a non map-matched image, the map-matched image including additional images displayed in association with a position on the map image, and the non map-matched image including all additional images, displayed on a screen of the navigation apparatus, except the map-matched image.

9. The display method of claim 7, wherein said adjusting opacity comprises:
adjusting, when the map-matched image and the non map-matched image overlap, opacity of the non map-matched image by a predetermined level.

10. The display method of claim 7, wherein said setting display priority of a plurality of additional images displayed on a map image comprises setting the display priority according to a speed that a vehicle equipped with the navigation apparatus is moving.

11. The display method of claim 7, wherein said adjusting of opacity comprises:
adjusting, when the non map-matched image overlaps a road region in which a vehicle is currently driving, opacity of the non map-matched image by predetermined levels.
